# EUROPÄISCHE PATENTSCHRIFT

(11) **EP 0 922 321 B1**
(45) Veröffentlichungstag und Bekanntmachung des Hinweises auf die Patenterteilung: **10.04.2002**
(21) Anmeldenummer: 97941869.6
(22) Anmeldetag: 29.08.1997
(51) Int. Cl.: H02H 3/04

(54) **SCHALTUNGSANORDNUNG ZUR ÜBERWACHUNG EINER ELEKTRONIKAUSLÖSEEINRICHTUNG FÜR NIEDERSPANNUNGSSCHALTER**
CIRCUIT ARRANGEMENT FOR MONITORING OF AN ELECTRONIC TRIPPING DEVICE FOR LOW VOLTAGE SWITCHES
CIRCUIT POUR LE CONTROLE D'UN DECLENCHEUR ELECTRONIQUE POUR COMMUTATEUR BASSE TENSION

(30) Priorität: 30.08.1996 DE 19636338
(43) Veröffentlichungstag der Anmeldung: 16.06.1999
(73) Patentinhaber: SIEMENS AKTIENGESELLSCHAFT, 80333 München (DE)
(72) Erfinder: BAUMGÄRTL, Ulrich, D-13599 Berlin (DE); RÖHL, Wolfgang, D-13503 Berlin (DE)
(86) Internationale Anmeldenummer: DE9701946
(87) Internationale Veröffentlichungsnummer: WO9809360

(56) Entgegenhaltungen:
- EP-A- 0 220 408
- GB-A- 2 056 094

## Beschreibung

Die Erfindung betrifft eine Schaltungsanordnung zur Überwachung einer Elektronikauslöseeinrichtung für Niederspannungsschalter mit einer Mikroprozessoreinrichtung, die in Verbindung mit einem Digital-Analog-Wandler einen Überstrom in der Weise auswertet, daß Netzauslösekontakte die zu schützenden Netzleitungen vom Versorgungsnetz abschalten.
Eine Schaltungsanordnung der eingangs definierten Art ist durch die DE 31 53 169 C2 bekannt. Mit dieser Schaltungsanordnung können Verschlechterungen der Stromwandler bzw. der elektronischen Auslöseeinrichtungen und deren Zuleitungen nicht erfaßt werden. Löst in einem solchen Fall der Leistungsschalter im Kurzschlußzustand oder im Überlastungszustand nicht mehr rechtzeitig aus, so kann hoher Sachschaden in den elektrischen Anlagen entstehen, der darüber hinaus auch Menschenleben gefährden kann. Bei den elektronischen Auslösern erfolgt der Abgleich bisher vorab im Prüffeld. Bine weitere Überprüfung der Stromwandler ist im eingebauten Zustand nur schwer möglich.
Die der Erfindung zugrundeliegende Aufgabe besteht darin, die Elektronikauslöseeinrichtungen mit den zugehörigen Schaltmitteln, also auch die Stromwandler mit den Zuleitungen, weitestgehend auf ihre Funktionsfähigkeit, insbesondere auch während des Betriebszustands, hin zu überwachen. Erfindungsgemäß wird dies durch die Merkmale
1.1 die Mikroprozessoreinrichtung der Elektronikeinrichtung ist mit einem Nulldurchgangskomperator ausgestattet,
1.2 der Nulldurchgangskomperator erzeugt im Nulldurchgang des Netzwechselstromes ein Freigabesignal,
1.3 das Freigabesignal steht mit einer schaltbaren Konstantstromquelle derart in Verbindung, daß ein Konstantstromimpuls über eine Stromwandlerzusatzwicklung in der Elektronikauslöseeinrichtung einen auswertbaren Prüfstrom induziert,
1.4 die Mikroprozessoreinrichtung weist einen Analog-Digital-Wandler auf, der den Prüfstrom zur Amplitudenmessung umwertet,
1.5 die Mikroprozessoreinrichtung bewirkt bei zulässiger Toleranzabweichung des Prüfstromes einen (Neu-) Abgleich der Elektronikauslöseeinrichtung,
1.6 die Mikroprozessoreinrichtung bewirkt bei unzulässiger Toleranzabweichung des Prüfstromes ein Alarmsignal zur Betätigung der Netzauslösekontakte.

Mit dem Vorsehen des Nulldurchgangskomparators innerhalb der Mikroprozessoreinrichtung kann in den Nulldurchgängen des Netzwechselstromes im laufenden Betrieb das sogenannte Freigabesignal zu der schaltbaren Konstantstromquelle übertragen werden, so daß mit dem nachfolgenden Konstantstromimpuls über die Stromwandlerzusatzwicklung ein Prüfstrom in der Elektronikauslöseeinrichtung induziert ist. Dieser von den elektrischen Werten des Spannungswandlers abhängige Prüfstrom wird in der Mikroprozessoreinrichtung hinsichtlich seiner Amplitude gemessen und mit einem vorgegebenen Sollwert verglichen. Bei relativ geringer Abweichung vom Sollwert, der den ordnungsgemäßen Zustand des Stromwandlers repräsentiert, kann ggf. ein (Neu-) Abgleich der Elektronikauslöseeinrichtung wirksam geschaltet werden. Wird der Sollwert in unzulässiger Weise überschritten, so löst die Mikroprozessoreinrichtung die Betätigung der Netzauslösekontakte zur Freischaltung der überwachten Netzleitungen vom Versorgungsnetz aus und erzeugt gleichzeitig ein Alarmsignal für die Schaltwarte aus.

Gemäß einer vorteilhaften Ausgestaltung der Erfindung ist das Merkmal
2.1 die Stromzusatzwicklung ist mit einer Stromwandlersekundärwicklung elektrisch gekoppelt,
vor. Damit kann der Konstantstromimpuls in einfacher Weise an die verschiedenen elektrischen Verhältnisse der Elektronikauslöseeinrichtungen angepaßt werden.

Eine weitere vorteilhafte Ausgestaltung der Erfindung sieht das Merkmal
3.1 der Konstantstromimpuls (KSI) ist im Dauerbereich von 0,1 ms bei einer Netzfrequenz von 50 Hz gewählt,
vor. Damit ist gewährleistet, daß eingestreute Spannungsspitzen nicht in irrtümlicher Weise zu Fehlauswertungen herangezogen werden können.

Eine weitere vorteilhafte Ausgestaltung der Erfindung sieht die Merkmale
4.1 die Überwachung der Elektronikauslöseeinrichtung erfolgt phasenweise nacheinander,
4.2 die Überwachung der Elektronikauslöseeinrichtung erfolgt in einem Zeitabstand im Bereich von lo Sekunden,
vor. Damit ist sichergestellt, das Funktionsfähigkeit der Stromwandler stets überwacht ist und im Störungsfall eine rechtzeitige Auslösung der Niederspannungsschalter erfolgt.

Eine weitere vorteilhafte Ausgestaltung der Erfindung ist durch das Merkmal
5.1 der Prüfstrom wird einer weiteren Elektronikauslöseeinrichtung direkt zur Ansteuerung der Netzauslösekontakte zugeführt,
gegeben, so daß der Prüfstrom - bei herkömmlichen Wandlern eingesetzt - auch ohne direkte Überprüfung des Wandlers die Abschaltung der zu überwachenden Netzleitungen vom Versorgungsnetz bewirkt.

Die Erfindung wird durch ein Ausführungsbeispiel näher erläutert, in dem lediglich die zum Verständnis der Erfindung notwendigen Schalteinrichtung teilweise auszugsweise dargestellt sind.
Im Ausführungsbeispiel sind die zu überwachenden Netzleitungen L1, L2, L3 dargestellt, die im Störungsfall bei Überströmen mit den Auslösekontakten NAK vom eigentlichen Versorgungsnetz getrennt werden. Die Betätigung der Netzauslösekontakte erfolgt durch den Auslösemagnet ALM, der seinerseits im Störfall durch die Mikroprozessoreinrichtung MPE ansteuerbar ist. Die Mikroprozessoreinrichtung MPE enthält einen Nulldurchgangskomparator NDK, der im Stromnulldurchgang des Wechselstromes ein Freigabesignal FGS erzeugt. Dieses Preigabesignal FGS wird der nachgeschalteten Konstantstromquelle KSQ zugeführt mit dem Ergebnis, daß ein Konstantstromimpuls KSI definierter Größe über die Strowandlerzusatzwicklung SWZ und der Stromwandlersekundärwicklung SWG in der Elektronikauslöseeinrichtung EAE den Prüfstrom PST erzeugt. Dieser Prüfstrom PST gibt Aufschluß über die elektrischen Verhältnisse des überprüften Stromwandlers. Der so gebildete Prüfstrom PST wird dann mit einem die ordnungsgemäßen Daten des Strowandlers repräsentierenden Sollwert verglichen und bei geringfügiger zulässiger Abweichung ein (Neu-) Abgleich der Elektronikauslöseeinrichtung bewirkt. Übersteigt die Abweichung des Prüfstromes vom Sollwert eine nicht mehr zulässige Größe, so wird der Auslösemagnet ALM von der Mikroprozessoreinrichtung MPE angesteuert und mittels der Netzauslösekontakte NAK die zu Überwachenden Netzleitungen L1, L2, L3 vom Versorgungsnetz getrennt. Gleichzeitig wird von. der Mikroprozessoreinrichtung MPE ein Alarmsignal ALS als optische und/oder akustische Kennung dieses Fehlerzustands, beispielsweise zur Schaltwarte, übertragen.
Der Konstantstromimpuls KSI kann in nicht dargestellter Weise auch einem herkömmlichen Stromwandler direkt zugeführt werden und so mit zur Auftrennung der zu überwachenden Netzleitungen vom eigentlichen Versorgungsnetz beitragen. In diesem Fall wird der Stromwandler selbst jedoch nicht überwacht.

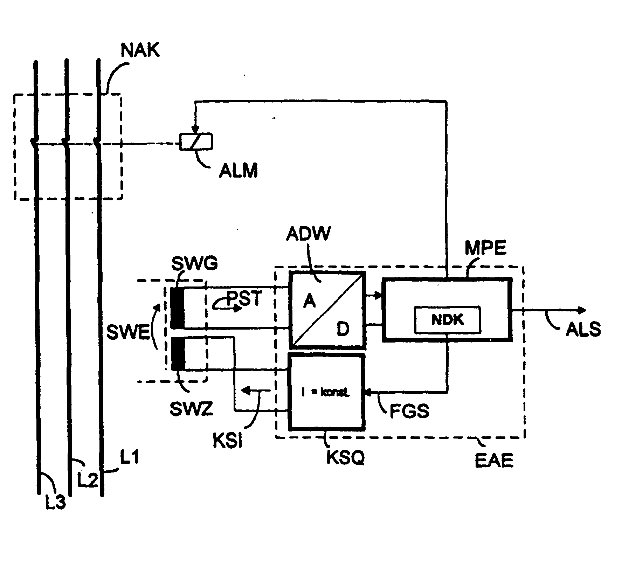

## Patentansprüche

1. Schaltungsanordnung zur Überwachung einer Elektronikauslöseeinrichtung (EAB) für Niederspannungsschalter mit einer Mikroprozessoreinrichtung (MPE), die in Verbindung mit einem Digital-Analog-Wandler einen Überstrom in der Weise auswertet, das Netzauslösekontakte (NAK) die zu schützenden Netzleitungen (L1, L2, L3) vom Versorgungsnetz abschalten,
**gekennzeichnet durch** die Merkmale
1.1 die Mikroprozessoreinrichtung (MPE) der Blektronikeinrichtung (EAE) ist mit einem Nulldurchgangskomperator (NDK) ausgestattet,
1.2 der Nulldurchgangskomperator (NDK) erzeugt im Nulldurchgang des Netzwechselstromes ein Freigabesignal (FGS),
1.3 das Freigabesignal (FGS) steht mit einer schaltbaren Konstantstromquelle (KSQ) derart in Verbindung, daß ein Konstantstromimpuls (KSI) über eine Stromwandlerzusatzwicklung (SWZ) in der Elektronikauslöseeinrichtung (EAE) einen auswertbaren Prüfstrom (PST) induziert,
1.4 die Mikroprozessoreinrichtung (MPE) weist einen Analog-Digital-Wandler (ADW) auf, der den Prüfstrom (PST) zur Amplitudenmessung umwertet,
1.5 die Mikroprozessoreinrichtung (MPE) bewirkt bei zulässiger Toleranzabweichung des Prüfstromes (PST) einen (Neu-) Abgleich der Elektronikauslöseeinrichtung (EAE),
1.6 die Mikroprozessoreinrichtung (MPE) bewirkt bei unzulässiger Toleranzabweichung des Prüfstromes (PST) ein Alarmsignal (ALM) zur Betätigung der Netzauslösekontakte (NAK).

2. Schaltungsanordnung nach Anspruch 1,
**gekennzeichnet durch** das Merkmal
2.1 die Stromzusatzwicklung (SWZ) ist mit einer Stromwandlersekundärwicklung (SWG) elektrisch gekoppelt.

3. Schaltungsanordnung nach Anspruch 1 und den Ansprüchen 1 und 2,
**gekennzeichnet durch** das Merkmal
3.1 der Konstantstromimpuls (KSI) ist im Dauerbereich von 0,1 ms bei einer Netzfrequenz von 50 Hz gewählt.

4. Schaltungsanordnung nach Anspruch 1 und den vorangegangenen Ansprüchen 1 bis 3,
**gekennzeichnet durch** die Merkmale
4.1 die Überwachung der Elektronikauslöseeinrichtung (EAE) erfolgt phasenweise nacheinander,
4.2 die Überwachung der Elektronikauslöseeinrichtung (EAE) erfolgt in einem Zeitabstand im Bereich von lo Sekunden.

5. Schaltungsanordnung nach Anspruch 1 und den vorangegangenen Ansprüchen 1 bis 4,
**gekennzeichnet durch** das Merkmal
5.1 der Prüfstrom (PST) wird einer weiteren Elektronikauslöseeinrichtung (EAE) direkt zur Ansteuerung der Netzauslösekontakte (NAK) zugeführt.

## Claims

1. Circuit arrangement for monitoring an electronic tripping device (EAB) for low-voltage switches having a microprocessor device (MPE) which, in conjunction with a digital/analogue converter, evaluates any overcurrent such that the mains system tripping contacts (NAK) disconnect the mains cables (L1, L2, L3) to be protected, from the mains supply system,
**characterized by** the following features
1.1 the microprocessor device (MPE) in the electronics device (EAE) is equipped with a zero-crossing comparator (NDK),
1.2 the zero-crossing comparator (NDK) produces an enable signal (FGS) at the zero crossing of the mains system alternating current,
1.3 the enable signal (FGS) is connected to a switchable constant current source (KSQ) such that a constant current pulse (KSI) induces a test current (PST), which can be evaluated, via a current transformer additional winding (SWZ) in the electronic tripping device (EAE),
1.4 the microprocessor device (MPE) has an analogue/digital converter (ADW) which changes the level of the test current (PST) for amplitude measurement,
1.5 the microprocessor device (MPE) causes the electronic tripping device (EAE) to be (re-) adjusted if the tolerance error of the test current (PST) is acceptable, and
1.6 the microprocessor device (MPE) causes an alarm signal (ALM) to be produced in order to operate the mains system tripping contacts (NAK) if the tolerance error is unacceptable.

2. Circuit arrangement according to Claim 1,
**characterized by** the following feature
2.1 the current additional winding (SWZ) is electrically coupled to a current transformer secondary winding (SWG).

3. Circuit arrangement according to Claim 1 and according to Claims 1 and 2,
**characterized by** the following feature
3.1 the constant current pulse (KSI) is chosen to have a time period of about 0.1 ms at a mains system frequency of 50 Hz.

4. Circuit arrangement according to Claim 1 and the preceding Claims 1 to 3,
**characterized by** the following features
4.1 the electronic tripping device (EAE) is monitored successively, phase-by-phase,
4.2 the electronic tripping device (EAE) is monitored at a time interval of about 10 seconds.

5. Circuit arrangement according to Claim 1 and the preceding Claims 1 to 4,
**characterized by** the following feature
5.1 the test current (PST) is supplied to a further electronic tripping device (EAE), in order to actuate the mains system tripping contacts (NAK) directly.

## Revendications

1. Circuit de contrôle d'un dispositif (EAE) électronique à déclencheur de commutateur basse tension comprenant un dispositif (MPE) à microprocesseur qui, en liaison avec un convertisseur numérique analogique, exploite une surintensité, de façon que le contact (NAK) de déclenchement du réseau déconnecte les conducteurs (L1, L2, L3) du réseau à protéger du réseau d'alimentation,
**caractérisé par** les caractéristiques,
1.1 le dispositif (MPE) à microprocesseur du dispositif (EAE) électronique est muni d'un comparateur (NDK) à passage par zéro,
1.2 le comparateur (NDK) à passage par zéro produit au passage par zéro du courant alternatif du réseau un signal (FGS) de libération,
1.3 le signal (FGS) de libération est en liaison avec une source (KSQ) de courant constant et qui peut être commutée de façon qu'une impulsion (KSI) de courant constant induise un courant (PST) d'essai pouvant être exploité par l'intermédiaire d'un enroulement (SWZ) supplémentaire de transformateur de courant du dispositif (EAE) électronique de déclenchement,
1.4 le dispositif (MPE) à microprocesseur a un convertisseur (ADW) analogique-numérique qui transforme le courant (PST) d'essai en une mesure d'amplitude,
1.5 le dispositif (MPE) à microprocesseur provoque, si l'on s'écarte des tolérances admissibles du courant (PST) d'essai, un (ré)équilibrage du dispositif (EAE) électronique de déclenchement,
1.6 le dispositif (MPE) à microprocesseur provoque, si l'on s'écarte des tolérances admissibles du courant (PST) d'essai, un signal (ALM) d'alerte destiné à actionner les contacts (NAK) de déclenchement du réseau.

2. Circuit suivant la revendication 1, **caractérisé par** la caractéristique,
2.1 l'enroulement (SWZ) supplémentaire de courant est couplé électriquement à l'enroulement (SWG) secondaire du transformateur de courant.

3. Circuit suivant la revendication 1 et les revendications 1 et 2, **caractérisé par** la caractéristique,
3.1 la durée de l'impulsion (KSI) de courant constant est d'environ 0,1 ms pour une fréquence du réseau de 50 Hz.

4. Circuit suivant les revendications 1 et les revendications 1 à 3 précédentes, **caractérisé par** les caractéristiques,
4.1 le contrôle du dispositif (EAE) électronique de déclenchement s'effectue phase après phase,
4.2 le contrôle du dispositif (EAE) électronique de déclenchement s'effectue dans un laps de temps de l'ordre de 10 s.

5. Circuit suivant la revendication 1 et les revendications 1 à 4 précédentes, **caractérisé par** la caractéristique,
5.1 le courant (PST) d'essai est envoyé à un autre dispositif (EAE) électronique de déclenchement directement pour commander les contacts (NAK) de déclenchement du réseau.
